# EUROPEAN PATENT SPECIFICATION

(11) **EP 3 296 661 B1**
(45) Date of publication and mention of the grant of the patent: **18.03.2020**
(21) Application number: 15891777.3
(22) Date of filing: 11.05.2015
(51) Int. Cl.: F24H 9/02, F24H 1/00, F24H 9/16, F24F 13/20, F24F 13/32, F25B 1/00, F24F 13/02, F24H 4/02, F24H 9/06, F24F 1/14, F24F 1/16, F24F 1/30, F24F 1/36, F24F 1/46, F24F 1/56, F25B 30/02

(54) **HEAT PUMP APPARATUS**
WÄRMEPUMPENVORRICHTUNG
APPAREIL DE POMPE À CHALEUR

(43) Date of publication of application: 21.03.2018
(73) Proprietor: Mitsubishi Electric Corporation, Chiyoda-ku Tokyo 100-8310 (JP)
(72) Inventor: FUJITA, Daiki, Tokyo 102-0073 (JP); HATTORI, Kaname, Tokyo 102-0073 (JP)
(74) Representative: Pfenning, Meinig & Partner mbB
(86) International application number: PCT/JP2015/063465
(87) International publication number: WO 2016/181451

(56) References cited:
- WO-A1-2014/103515
- JP-A- 2004 286 261
- JP-A- 2004 286 261
- JP-A- 2005 147 620
- JP-A- 2005 147 620
- JP-A- 2010 185 583
- JP-A- 2012 083 012
- JP-A- 2013 170 785
- JP-A- 2013 170 785
- JP-B1- 5 533 999
- JP-Y2- S6 340 749

## Description

### [Technical Field]

The present invention relates to a heat pump apparatus.

### [Background Art]

A heat pump apparatus (such as a heat pump water heater) configured to heat liquid (such as water) by absorbing heat of a low-temperature heat source (such as outside air) has been widely used. When the heat pump water heater is not in use for a long period of time, water inside the heat pump water heater is removed in some cases in order to prevent, for instance, damage due to freezing of the inside water.

A heat pump water heater disclosed in PTL 1 includes a pipe connector inlet, a pipe connector outlet, an air vent plug, and a water drain plug. The air vent plug is installed at the pipe connector outlet. The pipe connector inlet is a connection portion to which a pipe for supplying water to the heat pump water heater from a hot water storage tank or the like is connectable. The pipe connector outlet is a connection portion to which a pipe for supplying hot water heated by the heat pump water heater to the hot water storage tank or the like is connectable. The water drain plug is installed at a position lower than those of the pipe connector inlet and the pipe connector outlet. The heat pump water heater can remove water inside by opening the air vent plug and the water drain plug. PLT 2 relates to a heat pump heat source machine, and more particularly to a structure for maintenance for draining water stored in a built-in water heat exchanger. PLT 3 tries to provide a heat pump outdoor unit that can suppress increase of manufacturing cost, vibration of each part of a casing, and noise and low-frequency sound emitted from each part of the casing. PLT 4 concerns providing a heat pump hot water supply outdoor unit that can suppress the low-frequency vibration of a base and a water-refrigerant heat exchanger, and can suppress the irradiation of low-frequency sounds from the base and each part of a box. PLT 5 addresses a heat source unit for a refrigerating apparatus. PLT 6 tries to realize a water heater having excellent water-draining capability.

### [Citation List]

### [Patent Literature]

[PTL 1] Japanese Patent Application Publication No. 2014-77635 A
[PTL 2] Japanese Patent Application Publication No. 2005-147620 A
[PTL 3] Japanese Patent Application Publication No. 2013-170785 A
[PTL 4] Japanese Patent Application Publication No. 2012-083012 A
[PTL 5] International Patent Application Publication No. 2014/103515 A1
[PTL 6] Japanese Patent Application Publication No. 2004-286261 A

### [Summary of Invention]

### [Technical Problem]

In the above-mentioned conventional heat pump water heater, the water drain plug is located at the lower position away from the pipe connector inlet and the pipe connector outlet. Inside the heat pump water heater, a pipe that branches from a water pipe connected to the pipe connector inlet or the pipe connector outlet is connected to the water drain plug. This configuration needs a large number of components, thus increasing manufacturing cost and deteriorating assemblability.

The present invention has been made in order to solve the above-mentioned problem, and it is an object thereof to provide a heat pump apparatus capable of simplifying a structure for removing liquid.

### [Solution to Problem]

A heat pump apparatus according to the present invention as set forth in the independent claim includes: a base; a heat exchanger installed on the base, the heat exchanger being configured to exchange heat between refrigerant and liquid; a first connection portion that is connectable to an external liquid pipe; a second connection portion that is connectable to an external liquid pipe; a first pipe that connects the heat exchanger and the first connection portion to each other; a second pipe that connects the heat exchanger and the second connection portion to each other; and a support component fixed to the base, the support component being configured to support the first connection portion and the second connection portion. Over an entire length of the first pipe, a longitudinal direction of each portion of the first pipe extends horizontally or upward from the first connection portion toward the heat exchanger.

### [Advantageous Effects of Invention]

According to the heat pump apparatus of the present invention, for the entire length of the first pipe that connects the heat exchanger and the first connection portion, the longitudinal direction of each portion of the first pipe extends horizontally or upward toward the heat exchanger. Consequently, the structure for removing liquid can be simplified.

### [Brief Description of Drawings].

Fig. 1 is an exploded perspective view illustrating a heat pump water heater to which a heat pump apparatus according to Embodiment 1 of the present invention is applied Fig. 2 is an exploded perspective view including a base, a water-to-refrigerant heat exchanger, a first connection portion, and a second connection portion provided in the heat pump water heater according to Embodiment 1 of the present invention.
Fig. 3 is a front view of the heat pump water heater according to Embodiment 1 of the present invention.
Fig. 4 is a view as seen from the direction of the arrow A in Fig. 3.
Fig. 5 is an exploded perspective views illustrating a procedure of fixing a member to be supported and a support component to the base in assembling the heat pump water heater according to Embodiment 1 of the present invention.
Fig. 6 is an exploded perspective views illustrating a procedure of fixing a member to be supported and a support component to the base in assembling the heat pump water heater according to the front surface and left side surface of the heat pump water heater 1. The second panel 3b covers a part of the rear surface and the right side surface of the heat pump water heater 1. The top panel 3c covers the top surface of the heat pump water heater 1.

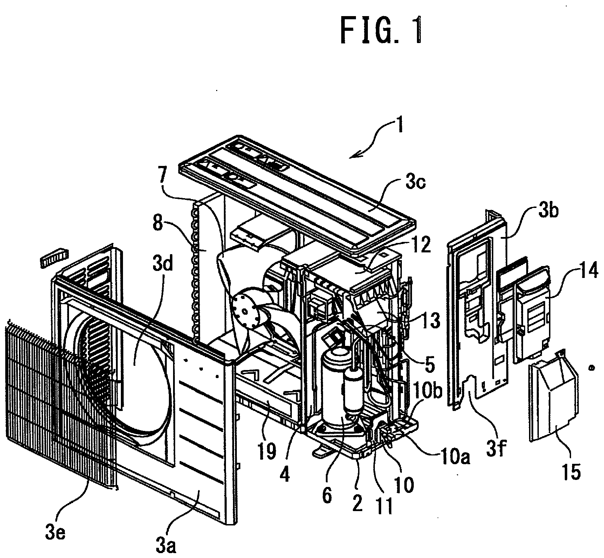

The heat pump water heater 1 includes a compressor 6, an air blower 7, an air-to-refrigerant heat exchanger 8, and a water-to-refrigerant heat exchanger 9. In Fig. 1, the water-to-refrigerant heat exchanger 9 is covered by a case portion 19 and is hidden. The compressor 6 is configured to compresse a refrigerant gas. The water-to-refrigerant heat exchanger 9 exchanges heat between water and high-pressure refrigerant compressed by the compressor 6, thereby heating the water. The high-pressure refrigerant that has passed through the water-to-refrigerant heat exchanger 9 is decompressed when passing through a decompression device (not shown) such as an expansion valve, and becomes a low-pressure gas-liquid two-phase state. The air-to-refrigerant heat exchanger 8 is an evaporator configured to evaporate the low-pressure refrigerant that has passed through the decompression device. The air blower 7 sends outside air such that the outside air passes through the air-to-refrigerant heat exchanger 8. The air-to-refrigerant heat exchanger 8 exchanges heat between the outside air and the low-pressure refrigerant, thereby evaporating the low-pressure refrigerant. A low-pressure refrigerant gas evaporated by passing through the air-to-refrigerant heat exchanger 8 is sucked into the compressor 6. Note that the evaporator in the present invention is not limited to the air-to-refrigerant heat exchanger 8. The evaporator in the present invention may exchange heat between a heat source other than outside air (such as groundwater, discharged water, and solar heated water) and refrigerant. The refrigerant is not particularly limited, but is preferably CO₂, for example.

The air-to-refrigerant heat exchanger 8 is disposed so as to cover the rear surface and left side surface of the heat pump water heater 1. The air blower 7 is disposed between the air-to-refrigerant heat exchanger 8 and the first panel 3a. The air blower 7 in the present embodiment includes a propeller fan. The inside of the shell of the heat pump water heater 1 is partitioned into an air blower chamber where the air blower 7 is located and a machine chamber 5. A partition 4 partitions the air blower chamber and the machine chamber 5. The air blower chamber includes the left side surface of the heat pump water heater 1. The machine chamber 5 includes the right side surface of the heat pump water heater 1. The water-to-refrigerant heat exchanger 9 is disposed below the air blower 7. Specifically, the water-to-refrigerant heat exchanger 9 is disposed at a lower part of the air blower chamber.

The first panel 3a has an opening 3d at a position facing the air blower 7. Outside air sent by the air blower 7 can pass through the opening 3d. A grid 3e covering the opening 3d is mounted to the first panel 3a.

In the machine chamber 5, the compressor 6, the above-mentioned decompression device, a refrigerant intake pipe, a refrigerant discharge pipe, and the like are arranged. A first connection portion 10a and a second connection portion 10b protrude from a lower part of the machine chamber 5 provided on the right side surface of the heat pump water heater 1. The first connection portion 10a is connectable to an external liquid pipe (not shown). The first connection portion 10a has an opening through which liquid (water) flows in during the operation of the heat pump water heater 1. The second connection portion 10b is connectable to an external liquid pipe (not shown). The second connection portion 10b has an opening from which liquid (water) flows out during the operation of the heat pump water heater 1. In the present embodiment, a water inlet pipe (not shown) for supplying water to the heat pump water heater 1 is connected to the first connection portion 10a. A hot water outlet pipe (not shown) for supplying hot water heated by the heat pump water heater 1 to another apparatus is connected to the second connection portion 10b.

The heat pump water heater 1 includes an electric component housing box 12. The electric component housing box 12 is disposed in a space occupying a part of the upper part of the air blower chamber and the upper part of the machine chamber 5. For example, the electric component housing box 12 houses electric components such as an inverter power supply for controlling drive of a motor for driving the compressor 6 and the air blower 7. A terminal block 13 is provided near the electric component housing box 12. The terminal block 13 is used for connection of external electric wiring. A service panel 14 is removably mounted to the second panel 3b. The service panel 14 protects the terminal block 13. Under the service panel 14, a connection portion cover 15 is removably mounted to the second panel 3b. The connection portion cover 15 protects the first connection portion 10a and the second connection portion 10b.

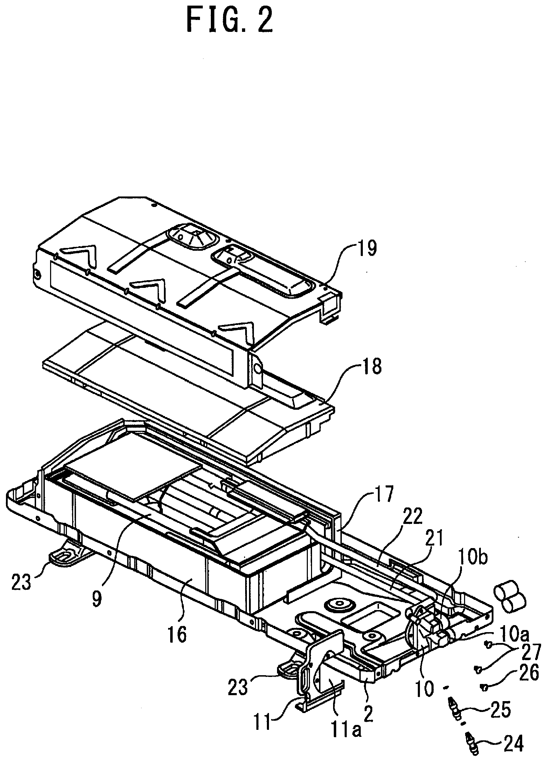

Fig. 2 is an exploded perspective view including the base 2, the water-to-refrigerant heat exchanger 9, the first connection portion 10a, and the second connection portion 10b provided in the heat pump water heater 1 according to Embodiment 1 of the present invention. As illustrated in Fig. 2, a plurality of legs 23 are fixed under the base 2. The heat pump water heater 1 is installed by fixing the legs 23 on an installation surface. In the description of the present embodiment, the inclination and other parameters of each portion are defined on the assumption that the heat pump water heater 1 is installed on a horizontal installation surface.

The water-to-refrigerant heat exchanger 9 is installed on the base 2. The water-to-refrigerant heat exchanger 9 is housed in a heat insulating container 16. The top surface of the water-to-refrigerant heat exchanger 9 housed in the heat insulating container 16 is covered by a heat insulating lid 18. The heat insulating container 16 and the heat insulating lid 18 are made of heat insulating material (for example, foamed plastic). The outer side of the heat insulating container 16 and the heat insulating lid 18 is covered by a case portion 17 and a case portion 19, that are made of metal. The case portion 17 is fixed to the base 2. The case portion 17 covers a region including the rear surface and left side surface of the heat insulating container 16. The case portion 19 is removably mounted to the case portion 17. The case portion 19 covers a region including the front surface of the heat insulating container 16 and the top surface of the heat insulating lid 18.

The heat pump water heater 1 includes a member to be supported 10, a support component 11, a first pipe 21, and a second pipe 22. It is preferred that the member to be supported 10, the support component 11, the first pipe 21, and the second pipe 22 be made of metal. The support component 11 is fixed to the base 2. Fig. 2 illustrates the state before the support component 11 is mounted to the base 2. The support component 11 supports the first connection portion 10a and the second connection portion 10b. In the present embodiment, the member to be supported 10 includes the first connection portion 10a and the second connection portion 10b. The member to be supported 10 is fixed to the support component 11. Fig. 2 illustrates the state before the member to be supported 10 is fixed to the support component 11. The first connection portion 10a and the second connection portion 10b are integrated because the member to be supported 10 includes the first connection portion 10a and the second connection portion 10b.

The position of the first connection portion 10a is lower than the position of the second connection portion 10b. In the present invention, the position of the first connection portion 10a and the position of the second connection portion 10b may be at the same height.

The first pipe 21 connects a water inlet of the water-to-refrigerant heat exchanger 9 and the first connection portion 10a. The second pipe 22 connects a water outlet of the water-to-refrigerant heat exchanger 9 and the second connection portion 10b. A hot water storage and supply system including a tank unit (not shown) having a hot water storage tank and the heat pump water heater 1 is configured as follows. The tank unit and the heat pump water heater 1 are connected to each other through a water inlet pipe and a hot water outlet pipe. The water inlet pipe (not shown) is connected to the first connection portion 10a. The hot water outlet pipe (not shown) is connected to the second connection portion 10b. For operation of accumulating heat in the hot water storage tank, a water pump (not shown) incorporated in the tank unit is used to cause water at the lower part of the hot water storage tank to flow into the water-to-refrigerant heat exchanger 9 through the water inlet pipe, the first connection portion 10a, and the first pipe 21. Hot water heated by the water-to-refrigerant heat exchanger 9 flows into an upper part of the hot water storage tank through the second pipe 22, the second connection portion 10b, and the hot water outlet pipe.

Note that the heat pump apparatus of the present invention is not limited to the one for use in the hot water storage and supply system. For example, the heat pump apparatus of the present invention is applicable also to an apparatus configured to heat liquid (liquid heat medium) that circulates for indoor-heating.

A first plug 24 is mounted near the first connection portion 10a. A second plug 25 is mounted near the second connection portion 10b. Fig. 2 illustrates the state before the first plug 24 and the second plug 25 are mounted.

Although the detailed illustration is omitted, the water-to-refrigerant heat exchanger 9 in the present embodiment has the following structure. The water-to-refrigerant heat exchanger 9 has a water pipe serving as a water flow path and a refrigerant pipe serving as a refrigerant flow path. The water pipe and the refrigerant pipe are bonded in intimate contact with each other. The refrigerant pipe is helically wound around the outer circumference of the water pipe. Note that, in the present invention, the structure of the heat exchanger configured to exchange heat between liquid and refrigerant is not limited to the structure of the above-mentioned water-to-refrigerant heat exchanger 9, and may be any structure.

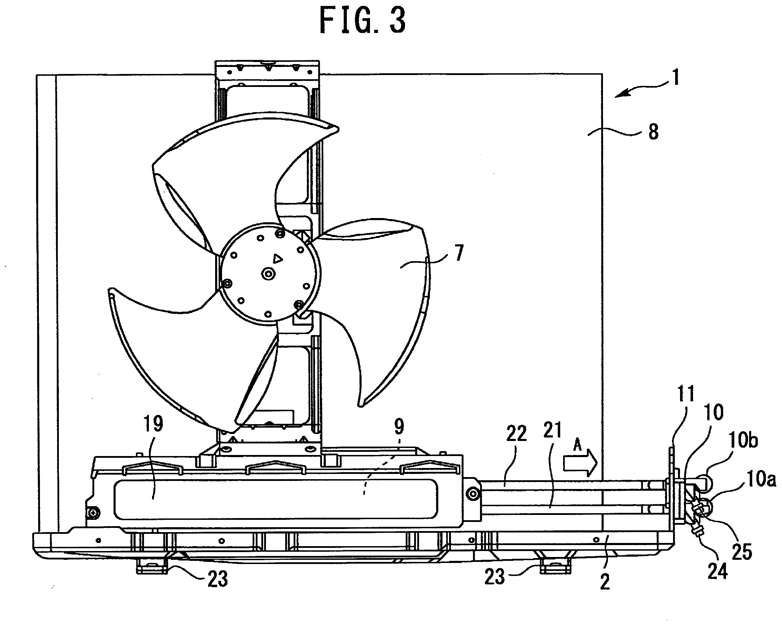

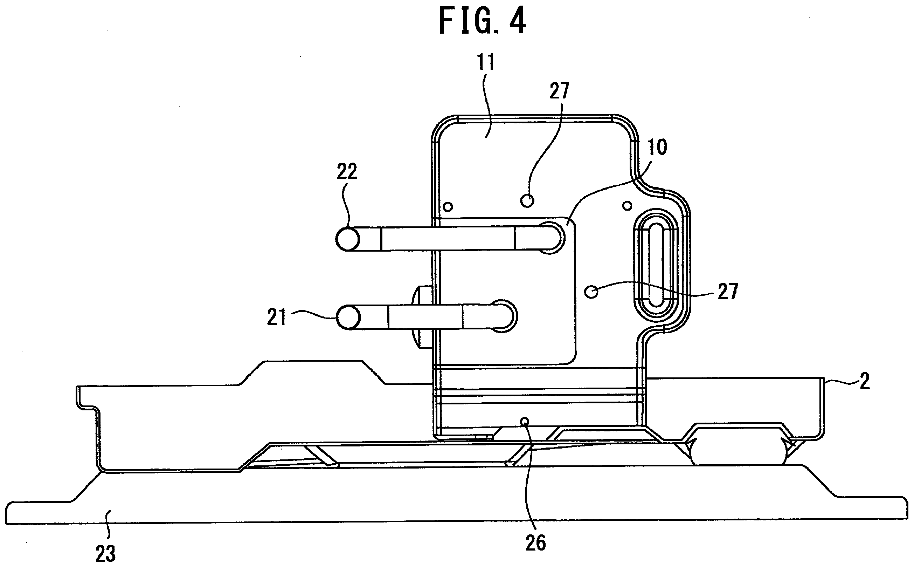

Fig. 3 is a front view of the heat pump water heater 1 according to Embodiment 1 of the present invention. In Fig. 3, the illustration of the first panel 3a, the second panel 3b, the top panel 3c, the partition 4, and the devices such as the compressor 6 and the electric component housing box 12 is omitted. Fig. 4 is a view as seen from the direction of the arrow A in Fig. 3. Fig. 4 illustrates cross-sections of the base 2, the first pipe 21, and the second pipe 22.

As illustrated in Fig. 3 and Fig. 4, the longitudinal direction of each portion of the first pipe 21 extends horizontally for the entire length of the first pipe 21. The longitudinal direction of each portion of the second pipe 22 extends horizontally for the entire length of the second pipe 22. As illustrated in Fig. 3, the first plug 24 is mounted to a lower part of the first connection portion 10a. The second plug 25 is mounted to a lower part of the second connection portion 10b. The first plug 24 and the second plug 25 are normally closed.

When the heat pump water heater 1 is not in use for a long period of time, water inside the heat pump water heater 1 is removed in some cases. Removing the water inside the heat pump water heater 1 can prevent damage, for example, to pipes due to freezing of the water.

A method of removing water inside the heat pump water heater 1 in the present embodiment is now described. First, the first plug 24 and the second plug 25 are opened. When the first plug 24 is opened, the flow path inside the first connection portion 10a communicates to the outside through the first plug 24. When the second plug 25 is opened, the flow path inside the second connection portion 10b communicates to the outside through the second plug 25. Next, an inflator or the like is used to send air to the inside of the second connection portion 10b through the second plug 25. The sent air pushes water inside the second pipe 22, the water-to-refrigerant heat exchanger 9, and the first pipe 21 to be discharged to the outside through the first plug 24. In the manner described above, the water inside the heat pump water heater 1 can be removed. The removal of the water inside the heat pump water heater 1 is hereinafter referred to also as "drainage treatment".

In the present embodiment, when water flows from the water-to-refrigerant heat exchanger 9 toward the first connection portion 10a through the first pipe 21 in the drainage treatment, there is no portion where the first pipe 21 extends upward. Thus, the water smoothly flows through the first pipe 21 to be discharged through the first plug 24. Consequently, the present embodiment can reliably prevent water from remaining inside the first pipe 21 in the drainage treatment.

The present embodiment can eliminate the need of a structure in which a pipe that branches from the middle of the first pipe 21 is connected to a discharge unit that is provided separately from the first connection portion 10a. Thus, the number of components can be reduced, and the manufacturing cost can be reduced. The assemblability can be improved.

It is desired that the first pipe 21 communicate to the lowermost part of the water flow path (liquid flow path) included in the water-to-refrigerant heat exchanger 9. When the first pipe 21 communicates to the lowermost part of the water flow path included in the water-to-refrigerant heat exchanger 9, water can be more reliably prevented from remaining inside the water-to-refrigerant heat exchanger 9 in the drainage treatment.

In the present embodiment, the longitudinal direction of each portion of the second pipe 22 extends horizontally for the entire length of the second pipe 22, and hence the following effect is obtained. In the drainage treatment, a pressure difference caused by the height difference in the second pipe 22 can be prevented from being generated inside the second pipe 22. Consequently, water inside the second pipe 22, the water-to-refrigerant heat exchanger 9, and the first pipe 21 can be pushed out more smoothly, and the workability of the drainage treatment is further improved. An effect similar to the above is obtained when the longitudinal direction of each portion of the second pipe 22 extends, for the entire length of the second pipe 22, horizontally or downward from the second connection portion 10b toward the water-to-refrigerant heat exchanger 9. Specifically, an effect similar to the above is obtained when the longitudinal direction of the second pipe 22 does not include, for the entire length of the second pipe 22, a portion that extends upward from the second connection portion 10b toward the water-to-refrigerant heat exchanger 9.

Note that the first plug 24 is an example of a discharge unit for removing liquid. The second plug 25 is an example of an air intake unit for removing liquid. The present invention is not limited to the configuration including the discharge unit and the air intake unit. In the present invention, the drainage treatment may involve discharging liquid by disconnecting the first connection portion 10a from an external liquid pipe. In this case, the discharge unit such as the first plug 24 may be omitted. In the present invention, the drainage treatment may involve taking air by disconnecting the second connection portion 10b from an external liquid pipe. In this case, the air intake unit such as the second plug 25 may be omitted.

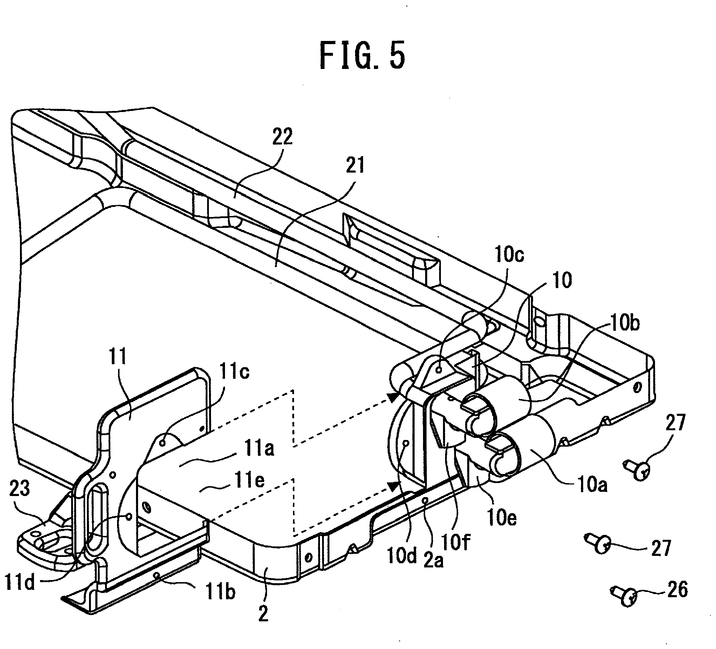

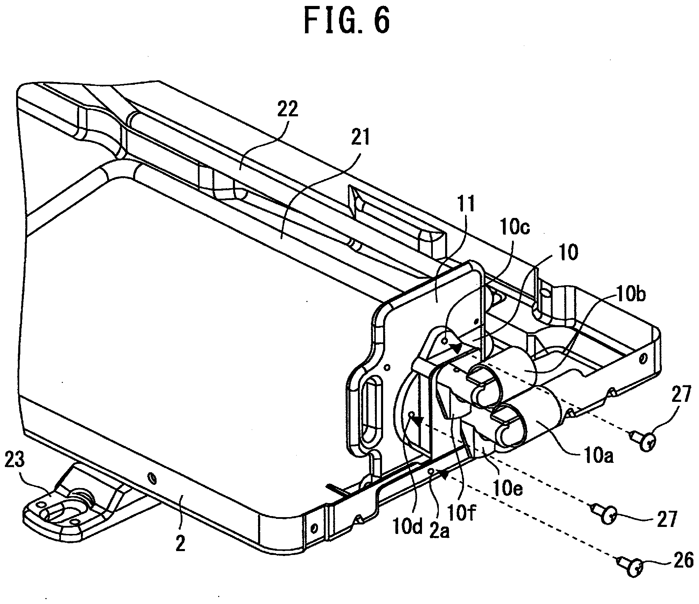

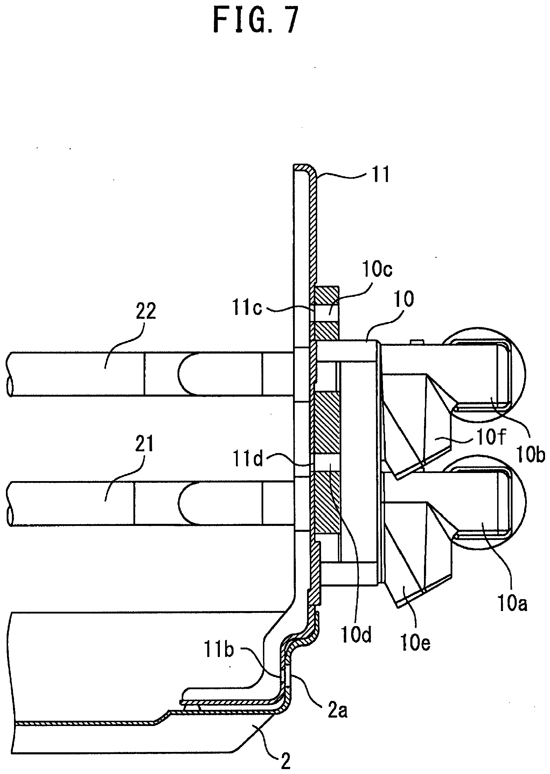

Fig. 5 and Fig. 6 are exploded perspective views illustrating a procedure of fixing the member to be supported 10 and the support component 11 to the base 2 in assembling the heat pump water heater 1 according to Embodiment 1 of the present invention. Fig. 7 is a cross-sectional view of the heat pump water heater 1 according to Embodiment 1 of the present invention, illustrating fixation locations of the base 2, the member to be supported 10, and the support component 11.

As illustrated in Fig. 5, the member to be supported 10 includes the first connection portion 10a, the second connection portion 10b, a hole 10c, a hole 10d, a plug mounting portion 10e, and a plug mounting portion 10f. The hole 10c and the hole 10d are holes used for second screws 27 to fix the member to be supported 10 to the support component 11. The plug mounting portion 10e is formed at a lower part of the first connection portion 10a. The first plug 24 is mounted to the plug mounting portion 10e. The plug mounting portion 10f is formed at a lower part of the second connection portion 10b. The second plug 25 is mounted to the plug mounting portion 10f. Note that Fig. 5 to Fig. 7 illustrate the state before the first plug 24 and the second plug 25 are mounted to the plug mounting portion 10e and the plug mounting portion 10f.

As illustrated in Fig. 5, the support component 11 includes a cutout portion 11a, a hole 11b, a hole 11c, and a hole 11d. The support component 11 has a shape obtained by removing the cutout portion 11a. The cutout portion 11a has an opening 11e at a side part of the support component 11. The hole 11b is a hole used for a first screw 26 to fix the support component 11 to the base 2. The base 2 has a hole 2a for the first screw 26. The hole 11c and the hole 11d are holes used for the second screws 27 to fix the member to be supported 10 to the support component 11.

The first pipe 21 and the second pipe 22 are fixed to the member to be supported 10 by brazing, for example. In assembling the heat pump water heater 1 of the present embodiment, the first pipe 21 and the second pipe 22 are fixed to the member to be supported 10 before the water-to-refrigerant heat exchanger 9 is placed on the base 2. Specifically, an assembly including the water-to-refrigerant heat exchanger 9, the member to be supported 10, the first pipe 21, and the second pipe 22 is assembled before the water-to-refrigerant heat exchanger 9 is placed on the base 2. After that, the assembly is placed on the base 2 before the support component 11 is mounted to the base 2. Fig. 5 illustrates the state in which the assembly is placed on the base 2 before the support component 11 is mounted to the base 2. By placing the assembly on the base 2, the water-to-refrigerant heat exchanger 9 and components connected thereto can all be positioned. In the present embodiment, the assembly can be positioned with respect to the base 2 by placing the assembly on the base 2 so that the water-to-refrigerant heat exchanger 9 is housed in the heat insulating container 16 installed on the base 2.

After the assembly is mounted on the base 2 before the support component 11 is mounted to the base 2, the support component 11 can be mounted to a proper fixation position such that the first pipe 21 and the second pipe 22 are inserted to the cutout portion 11a. In this case, in the present embodiment, the support component 11 can be slid to the side as indicated by the broken-line arrows in Fig. 5 such that the support component 11 is mounted to a proper fixation position. Fig. 6 and Fig. 7 illustrate the state in which the support component 11 is mounted to a proper fixation position.

The state in which the support component 11 is mounted to a proper fixation position as illustrated in Fig. 7 is as follows. The position of the hole 11b in the support component 11 matches with the position of the hole 2a in the base 2. The position of the hole 11c in the support component 11 matches with the position of the hole 10c in the member to be supported 10. The position of the hole 11d in the support component 11 matches with the position of the hole 10d in the member to be supported 10.

As illustrated in Fig. 6, the support component 11 can be fixed to the base 2 by mounting and fastening the first screw 26 to a hole where the hole 11b in the support component 11 and the hole 2a in the base 2 overlap with each other. The member to be supported 10 can be fixed to the support component 11 by mounting and fastening the second screws 27 into a hole where the hole 11c in the support component 11 and the hole 10c in the member to be supported 10 overlap with each other and a hole where the hole 11d in the support component 11 and the hole 10d in the member to be supported 10 overlap with each other. In the manner described above, the member to be supported 10 including the first connection portion 10a and the second connection portion 10b can be fixed to the base 2 through the support component 11.

In the present embodiment, the brazing for fixing the first pipe 21 and the second pipe 22 is not required to be performed on the base 2. Thus, brazing filler metal does not drip on the base 2 during the assembly, and hence the workability is improved.

In the present embodiment, the first screw 26 and the second screw 27 can be fastened from the same direction as illustrated in Fig. 6. Thus, the workability in the assembly is improved.

As illustrated in Fig. 6, in the assembled state, the member to be supported 10 covers the entire cutout portion 11a of the support component 11. Thus, the heat pump water heater 1 of the present embodiment can reliably prevent the entry of bugs or foreign matters into the machine chamber 5 through the cutout portion 11a of the support component 11. Note that the second panel 3b has a cutout portion 3f whose shape corresponds to the support component 11 as illustrated in Fig. 1. With the second panel 3b mounted, the cutout portion 3f and the support component 11 come into contact with each other without any gap. Thus, the entry of bugs or foreign matters into the machine chamber 5 from the periphery of the support component 11 can be reliably prevented.

In the present embodiment, the cutout portion 11a of the support component 11 has the opening 11e at the side part thereof, and hence as indicated by the broken-line arrows in Fig. 5, the support component 11 can be slid to the side such that the first pipe 21 and the second pipe 22 are inserted to the cutout portion 11a. Thus, the support component 11 can be easily mounted to a proper fixation position. Note that the cutout portion of the support component in the present invention is not limited to the one having an opening at the side part thereof. For example, the cutout portion of the support component in the present invention may have an opening at a lower part thereof. In this case, the support component can be mounted to a proper fixation position by moving the support component downward.

The present invention is not limited to the configuration in which the longitudinal direction of each portion of the first pipe 21 extends horizontally for the entire length of the first pipe 21. In the present invention, it is only necessary that, for the entire length of the first pipe 21, the longitudinal direction of each portion of the first pipe 21 extend horizontally or upward from the first connection portion 10a toward the water-to-refrigerant heat exchanger 9. For example, the first pipe 21 may include a portion whose longitudinal direction extends horizontally and a portion whose longitudinal direction extends upward from the first connection portion 10a toward the water-to-refrigerant heat exchanger 9. Specifically, it is only necessary that, for the entire length of the first pipe 21, the longitudinal direction of the first pipe 21 do not include a portion extending downward from the first connection portion 10a toward the water-to-refrigerant heat exchanger 9. Such a configuration can reliably prevent water from remaining inside the first pipe 21 in the drainage treatment. Such a configuration eliminates the need of a structure in which a pipe that branches from the middle of the first pipe 21 is connected to a discharge unit that is provided separately from the first connection portion 10a. Consequently, the number of components can be reduced, and the manufacturing cost can be reduced. The assemblability can be improved.

In the present embodiment, the single member to be supported 10 includes the first connection portion 10a and the second connection portion 10b, and hence the first connection portion 10a and the second connection portion 10b are integrated together. This configuration enables the position of the first connection portion 10a to be closer to the position of the second connection portion 10b. This configuration enables the support component 11 and the member to be supported 10 to be downsized.

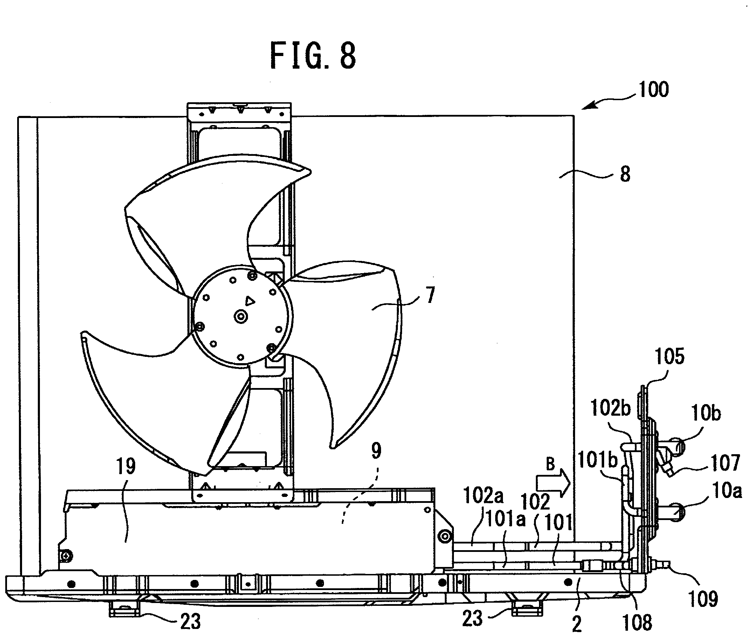

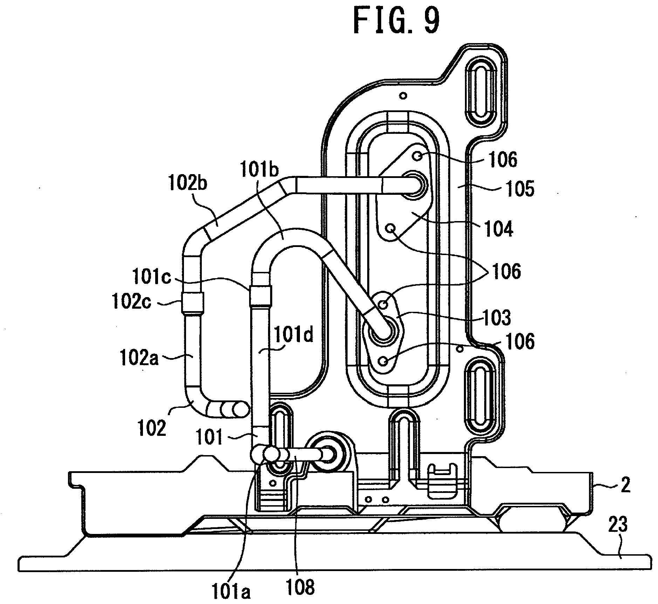

Next, a heat pump water heater according to a comparative example is described with reference to Fig. 8 and Fig. 9. Differences from the heat pump water heater 1 according to Embodiment 1 are mainly described, and the same or corresponding parts are denoted by the same names and descriptions thereof are simplified or omitted. Fig. 8 is a front view of the heat pump water heater according to the comparative example. Fig. 9 is a view as seen from the direction of the arrow B in Fig. 8.

As illustrated in Fig. 8, a heat pump water heater 100 according to the comparative example includes a support component 105 fixed to a base 2. The support component 105 supports a first connection portion 10a and a second connection portion 10b. A first pipe 101 connects a water inlet of a water-to-refrigerant heat exchanger 9 and the first connection portion 10a. A second pipe 102 connects a water outlet of the water-to-refrigerant heat exchanger 9 and the second connection portion 10b. The first pipe 101 includes a section 101a and a section 101b. The section 101a is connected to the water-to-refrigerant heat exchanger 9. The section 101b is connected to the first connection portion 10a. The second pipe 102 includes a section 102a and a section 102b. The section 102a is connected to the water-to-refrigerant heat exchanger 9. The section 102b is connected to the second connection portion 10b. A plug 107 is mounted at a lower part of the second connection portion 10b. The plug 107 is an example of an air intake unit for removing liquid.

The support component 105 further supports a water drain plug 109. The water drain plug 109 is located at a position lower than those of the first connection portion 10a and the second connection portion 10b. The water drain plug 109 is an example of a discharge unit for removing liquid. A branch pipe 108 branches from the middle of the first pipe 101. The branch pipe 108 is connected to the water drain plug 109.

Drainage treatment of the heat pump water heater 100 according to the comparative example is implemented as follows. First, the plug 107 and the water drain plug 109 are opened. Next, an air inflator or the like is used to send air to the inside of the second connection portion 10b through the plug 107. The sent air pushes out water inside the second pipe 102, the water-to-refrigerant heat exchanger 9, the first pipe 101, and the branch pipe 108 to be discharged to the outside through the water drain plug 109.

As illustrated in Fig. 9, the member to be supported 103 including the first connection portion 10a is fixed to the support component 105 with screws 106. The member to be supported 104 including the second connection portion 10b is fixed to the support component 105 with screws 106.

The heat pump water heater 100 according to the comparative example is assembled as follows. An assembly including the first connection portion 10a (member to be supported 103), the second connection portion 10b (member to be supported 104), the section 101b of the first pipe 101, the section 102b of the second pipe 102, and the support component 105 is assembled in advance. Next, the water-to-refrigerant heat exchanger 9 is placed on the base 2. The water-to-refrigerant heat exchanger 9 is connected with the section 101a of the first pipe 101 and the section 102a of the second pipe 102. Next, the support component 105 in the assembly is fixed to the base 2 with screws. After that, the section 101a and the section 101b of the first pipe 101 are fixed together by brazing at a brazing position 101c. The section 102a and the section 102b of the second pipe 102 are fixed together by brazing at a brazing position 102c.

As illustrated in Fig. 9, the longitudinal direction of the first pipe 101 at the brazing position 101c and its vicinity is the vertical direction. The longitudinal direction of the second pipe 102 at the brazing position 102c and its vicinity is the vertical direction. This configuration is necessary because brazing filler metal needs to be prevented from dripping when the brazing position 101c and the brazing position 102c are brazed. Due to this configuration, the positions of the first connection portion 10a and the second connection portion 10b are high. As a result, a discharge unit (water drain plug 109) for removing liquid needs to be separately provided at a low position away from the first connection portion 10a. The first pipe 101 includes a portion 101d whose longitudinal direction extends downward from the first connection portion 10a toward the water-to-refrigerant heat exchanger 9.

In the heat pump water heater 100 according to the comparative example, the branch pipe 108 that branches from the middle of the first pipe 101 needs to be connected to the discharge unit (water drain plug 109) that is provided separately from the first connection portion 10a. Thus, the number of components is large, the manufacturing cost is high, and the assemblability is low.

In the heat pump water heater 100 according to the comparative example, in the drainage treatment, water is apt to remain inside the first pipe 101 between a part where the branch pipe 108 branches and the first connection portion 10a. It is therefore difficult to reliably prevent damage to the first pipe 101 or the like due to freezing of the remaining water.

### [Reference Signs List]

- 1: heat pump water heater
- 2: base
- 2a: hole
- 3a: first panel
- 3b: second panel
- 3c: top panel
- 3d: opening
- 3e: grid
- 3f: cutout portion
- 4: partition
- 5: machine chamber
- 6: compressor
- 7: air blower
- 8: air-to-refrigerant heat exchanger
- 9: water-to-refrigerant heat exchanger
- 10: member to be supported
- 10a: first connection portion
- 10b: second connection portion
- 10c: hole
- 10d: hole
- 10e: plug mounting portion
- 10f: plug mounting portion
- 11: support component
- 11a: cutout portion
- 11b: hole
- 11c: hole
- 11d: hole
- 11c: opening
- 12: electric component housing box
- 13: terminal block
- 14: service panel
- 15: connection portion cover
- 16: heat insulating container
- 17: case portion
- 18: heat insulating lid
- 19: case portion
- 21: first pipe
- 22: second pipe
- 23: leg
- 24: first plug
- 25: second plug
- 26: first screw
- 27: second screw
- 100: heat pump water heater
- 101: first pipe
- 101a: section
- 101b: section
- 101c: brazing position
- 102: second pipe
- 102a: section
- 102b: section
- 102c: brazing position
- 103: member to be supported
- 104: member to be supported
- 105: support component
- 106: screw
- 107: plug
- 108: branch pipe
- 109: water drain plug

## Claims

1. A heat pump apparatus (1), comprising:
a base (2);
a heat exchanger (9) installed on the base (2), the heat exchanger (9) being configured to exchange heat between refrigerant and liquid;
a first connection portion (10a) that is connectable to an external liquid pipe;
a second connection portion (10b) that is connectable to an external liquid pipe;
a first pipe (21) that connects the heat exchanger (9) and the first connection portion (10a) to each other;
a second pipe (22) that connects the heat exchanger (9) and the second connection portion (10b) to each other; and
a support component (11) fixed to the base (2), the support component (11) being configured to support the first connection portion (10a) and the second connection portion (10b),
**characterized in that**, over an entire length of the first pipe (21), a longitudinal direction of each portion of the first pipe (21) extends horizontally or upward from the first connection portion (10a) toward the heat exchanger(9).

2. The heat pump apparatus (1) according to claim 1, wherein the first pipe (21) communicates to a lowermost part of a liquid flow path of the heat exchanger (9).

3. The heat pump apparatus (1) according to claim 1 or 2, wherein, over an entire length of the second pipe (22), a longitudinal direction of each portion of the second pipe (22) extends horizontally or downward from the second connection portion (10b) toward the heat exchanger (9).

4. The heat pump apparatus (1) according to any one of claims 1 to 3, wherein
the support component (11) has a cutout portion (11a); wherein the support component (11) is mountable to a fixation position such that the cutout portion (11a) is configured for insertion of the first pipe (21) and the second pipe (22) into the cutout portion (11a).

5. The heat pump apparatus (1) according to claim 4, further comprising a member to be supported (10) including the first connection portion (10a) and the second connection portion (10b),
wherein the member to be supported (10) is fixed to the support component (11).

6. The heat pump apparatus (1) according to claim 5, wherein the member to be supported (10) covers the cutout portion (11a).

7. The heat pump apparatus (1) according to claim 5 or 6, further comprising:
a first screw (26) that fixes the support component (11) to the base (2); and
a second screw (27) that fixes the member to be supported (10) to the support component (11),
wherein the first screw (26) and the second screw (27) are allowed to be fastened from the same direction.

8. The heat pump apparatus (1) according to any one of claims 4 to 7, wherein the cutout portion (11a) has an opening (11e) at a side part of the support component (11).

9. The heat pump apparatus (1) according to any one of claims 1 to 8, further comprising a discharge unit (24) for removing the liquid, the discharge unit being provided near the first connection portion (10a).

## Patentansprüche

1. Wärmepumpenvorrichtung (1), umfassend:
eine Basis (2);
einen Wärmetauscher (9), der auf der Basis (2) installiert ist, wobei der Wärmetauscher (9) konfiguriert ist, um Wärme zwischen einem Kältemittel und einer Flüssigkeit auszutauschen;
einen ersten Verbindungsabschnitt (10a), der mit einer äußeren Flüssigkeitsleitung verbindbar ist;
einen zweiten Verbindungsabschnitt (10b), der mit einer äußeren Flüssigkeitsleitung verbindbar ist;
eine erste Leitung (21), die den Wärmetauscher (9) und den ersten Verbindungsabschnitt (10a) miteinander verbindet;
eine zweite Leitung (22), die den Wärmetauscher (9) und den zweiten Verbindungsabschnitt (10b) miteinander verbindet; und
eine Stützkomponente (11), die an der Basis (2) befestigt ist, wobei die Stützkomponente (11) konfiguriert ist, um den ersten Verbindungsabschnitt (10a) und den zweiten Verbindungsabschnitt (10b) zu stützen,
**dadurch gekennzeichnet, dass** sich über eine gesamte Länge der ersten Leitung (21) eine Längsrichtung jedes Abschnitts der ersten Leitung (21) von dem ersten Verbindungsabschnitt (10a) zu dem Wärmetauscher (9) horizontal oder nach oben erstreckt.

2. Wärmepumpenvorrichtung (1) nach Anspruch 1, wobei die erste Leitung (21) mit einem untersten Teil eines Flüssigkeitsströmungswegs des Wärmetauschers (9) kommuniziert.

3. Wärmepumpenvorrichtung (1) nach Anspruch 1 oder 2, wobei sich über eine gesamte Länge der zweiten Leitung (22) eine Längsrichtung jedes Abschnitts der zweiten Leitung (22) von dem zweiten Verbindungsabschnitt (10b) zu dem Wärmetauscher (9) horizontal oder nach unten erstreckt.

4. Wärmepumpenvorrichtung (1) nach einem der Ansprüche 1 bis 3, wobei die Stützkomponente (11) einen Ausschnittsabschnitt (11a) aufweist; wobei die Stützkomponente (11) an einer Befestigungsposition montierbar ist, sodass der Ausschnittsabschnitt (11a) zum Einsetzen der ersten Leitung (21) und der zweiten Leitung (22) in den Ausschnittsabschnitt (11a) konfiguriert ist.

5. Wärmepumpenvorrichtung (1) nach Anspruch 4, weiter umfassend ein zu stützendes Element (10), beinhaltend den ersten Verbindungsabschnitt (10a) und den zweiten Verbindungsabschnitt (10b),
wobei das zu stützende Element (10) an der Stützkomponente (11) befestigt ist.

6. Wärmepumpenvorrichtung (1) nach Anspruch 5, wobei das zu stützende Element (10) den Ausschnittsabschnitt (11a) bedeckt.

7. Wärmepumpenvorrichtung (1) nach Anspruch 5 oder 6, weiter umfassend:
eine erste Schraube (26), die die Stützkomponente (11) an der Basis (2) befestigt; und
eine zweite Schraube (27), die das zu stützende Element (10) an der Stützkomponente (11) befestigt,
wobei erlaubt ist, dass die erste Schraube (26) und die zweite Schraube (27) aus der gleichen Richtung festgezogen werden.

8. Wärmepumpenvorrichtung (1) nach einem der Ansprüche 4 bis 7, wobei der Ausschnittsabschnitt (11a) eine Öffnung (11e) an einem Seitenteil der Stützkomponente (11) aufweist.

9. Wärmepumpenvorrichtung (1) nach einem der Ansprüche 1 bis 8, weiter umfassend eine Abführeinheit (24) zum Entfernen der Flüssigkeit, wobei die Abführeinheit nahe dem ersten Verbindungsabschnitt (10a) bereitgestellt ist.

## Revendications

1. Appareil de pompe à chaleur (1), comprenant :
une base (2) ;
un échangeur de chaleur (9) installé sur la base (2), l'échangeur de chaleur (9) étant configuré pour échanger la chaleur entre un fluide frigorigène et un liquide ;
une première partie connexion (10a) qui peut être connectée à une canalisation de liquide extérieure ;
une seconde partie connexion (10b) qui peut être connectée à une canalisation de liquide extérieure ;
une première canalisation (21) qui connecte l'un à l'autre l'échangeur de chaleur (9) et la première partie connexion (10a) ;
une seconde canalisation (22) qui connecte l'un à l'autre l'échangeur de chaleur (9) et la seconde partie connexion (10b) ; et
un composant support (11) fixé sur la base (2), le composant support (11) étant configuré pour supporter la première partie connexion (10a) et la seconde partie connexion (10b),
**caractérisé en ce que**, sur toute la longueur de la première canalisation (21), la direction longitudinale de chaque partie de la première canalisation (21) s'étend horizontalement ou vers le haut à partir de la première partie connexion (10a) vers l'échangeur de chaleur (9).

2. Appareil de pompe à chaleur (1) selon la revendication 1, où la première canalisation (21) communique avec la partie la plus basse du chemin d'écoulement de liquide de l'échangeur de chaleur (9).

3. Appareil de pompe à chaleur (1) selon la revendication 1 ou 2, où sur toute la longueur de la seconde canalisation (22), la direction longitudinale de chaque partie de la seconde canalisation (22) s'étend horizontalement ou vers le bas à partir de la seconde partie connexion (10b) vers l'échangeur de chaleur (9).

4. Appareil de pompe à chaleur (1) selon l'une quelconque des revendications 1 à 3,
où le composant support (11) présente une partie découpe (11a) ; où le composant support (11) peut être monté dans une position de fixation de telle sorte que la partie découpe (11a) soit configurée pour insérer la première canalisation (21) et la seconde canalisation (22) dans la partie découpe (11a).

5. Appareil de pompe à chaleur (1) selon la revendication 4, comprenant en outre un élément à supporter (10) comprenant la première partie connexion (10a) et la seconde partie connexion (10b), où l'élément à supporter (10) est fixé sur le composant support (11).

6. Appareil de pompe à chaleur (1) selon la revendication 5, où l'élément à supporter (10) couvre la partie découpe (11a).

7. Appareil de pompe à chaleur (1) selon la revendication 5 ou 6, comprenant en outre :
une première vis (26) qui fixe le composant support (11) sur la base (2) ; et
une seconde vis (27) qui fixe l'élément à supporter (10) sur le composant support (11), où la première vis (26) et la seconde vis (27) peuvent être fixées à partir de la même direction.

8. Appareil de pompe à chaleur (1) selon l'une quelconque des revendications 4 à 7, où la partie découpe (11a) présente une ouverture (11e) au niveau d'une partie latérale du composant support (11).

9. Appareil de pompe à chaleur (1) selon l'une quelconque des revendications 1 à 8 comprenant en outre une unité évacuation (24) destinée à retirer le liquide, l'unité évacuation étant disposée à proximité de la première partie connexion (10a).
